# EUROPÄISCHE PATENTANMELDUNG

(11) **EP 0 945 817 A2**
(43) Veröffentlichungstag der Anmeldung: **29.09.1999**
(21) Anmeldenummer: 99105821.5
(22) Anmeldetag: 23.03.1999
(51) Int. Cl.: G06K 7/00

(54) **Verfahren zur Nutzung von Uhren in Verbindung mit Chipkarten**

(30) Priorität: 23.03.1998 DE 19812469
(71) Anmelder: Angewandte Digital Elektronik GmbH, 21521 Dassendorf (DE); Junghans Uhren GmbH, 78713 Schramberg (DE)
(72) Erfinder: Kreft, Hans-Diedrich, 21521 Dassendorf (DE); Schaffer, Holger, , (DE)
(74) Vertreter: Mierswa, Klaus, Dipl.-Ing.

(57) **Zusammenfassung**

Die Erfindung betrifft ein Verfahren zum Steuern und Bewerkstelligen des Ablaufes eines wechselweisen Informations- und Datenaustauschers zwischen einer elektronischen Uhr und einer Chipkarte, sowie einem Ladegerät/Terminal. Die Chipkarte enthält Mittel, mit denen sie mit einem Ladegerät B Daten über Kontakte und/oder eine kontaktfreie Verbindung austauschen kann, wobei die Chipkarte Mittel zum Speichern von Daten enthält. Das Ladegerät enthält zusätzlich zu den Mitteln zum kontaktbehafteten und/oder kontaktfreien Datenaustausch mit der Chipkarte Mittel zum kontaktbehafteten und/oder kontaktfreien Datenaustausch mit der Uhr. Zwischen der Chipkarte und der Uhr können zum Beispiel unter Zuihilfenahme eines Mobiltelefons Daten ausgetauscht werden, so daß zur zusätzlichen Nutzung mittels der Uhr weitere Geräte angesteuert oder mit weiteren Geräten Daten und/oder Programme ausgetauscht werden können.

## Beschreibung

### Technisches Gebiet:

Die Erfindung betrifft ein Verfahren zum Steuern und Bewerkstelligen des Ablaufes eines wechselweisen Informations- und Datenaustausches zwischen einer elektronischen Uhr und einer Chipkarte sowie einem Ladegerät/Terminal, gemäß dem Oberbegriff des Anspruchs 1.

### Stand der Technik und Problemstellung:

Zunehmend zum Einsatz kommen Chipkarten wie sie beispielsweise in der Schrift "CombiChip with contactless & contact interfase: Great prospects for smart cards" Druckschriftnummer B116-h7075-G1-X-7600 der Siemens Aktiengesellschaft, beschrieben sind. Gleichzeitig finden Uhren zunehmend Verwendung, wie sie in der Schrift "Die Uhr ist ein Ticket, ein Schlüssel, eine Geldbörse, ein Ausweis", Druckschriftnummer 42745-0734/1296 der Firma Junghans beschrieben sind. Chipkarten wie auch Uhren enthalten elektronische Bauteile zum kontaktbehafteten und/oder kontaktfreien bidirektionalen Datenaustausch mit ihrer Umwelt. In Uhren wie Chipkarten werden Mikorprozessoren und elektronische Speicher genutzt. Chipkarten werden vielfältig genutzt, um Zahlungsvorgänge per elektronischer Geldbörse durchzuführen.

Aus der DE 39 35 364 C1 ist eine Chipkarte bekannt geworden, die sowohl kontaktfrei wie auch kontaktbehaftet Informationen mit ihrer Umwelt austauscht und die selbstätig festlegt, in welchem Modus die Chipkarte zu arbeiten hat. Uhren sind vorwiegend für Zeiterfassung und Identifikation ihres Trägers im Einsatz.

### Technische Aufgabe:

Der Erfindung liegt die Aufgabe zugrunde, ein Verfahren anzugeben, mit denen die Daten einer Chipkarte mit denen in einer Uhr, vorwiegend Armbanduhr ausgetauscht und/oder kombiniert werden können, um so auch neuartige Nutzungen von Uhren und/oder Chipkarten aufgrund des Austausches von Information zwischen Chipkarte und Uhr zu ermöglichen.

### Offenbarung der Erfindung und deren Vorteile:

Die Lösung der Aufgabe besteht erfindungsgemäß darin, daß zum Steuern des Ablaufes eines wechselweisen Informations- und Datenaustausches zwischen einer elektronischen Uhr C und einer Chipkarte sowie einem Ladegerät/ Terminal,
1. die Chipkarte A Mittel enthält, mit denen sie mit dem Ladegerät B Daten über galvanische Kontakte und/oder über eine kontaktfreie, elektromagnetische Verbindung austauschen kann.
2. wobei die Chipkarte A Mittel zum Speichern von Daten enthält
3. wobei das Ladegerät B zusätzlich zu den Mitteln zum kontaktbehafteten und/oder kontaktfreien Datenaustausch mit der Chipkarte A Mittel zum kontaktbehafteten und/oder kontaktfreien Datenaustausch mit der Uhr enthält,
4. wobei Daten, welche in einem ersten Schritt von der Chipkarte A nach dem Ladegerät B oder dem Ladegerät B nach der Chipkarte A zwecks Speicherung geladen wurden, in einem zweiten Schritt von dem Ladegerät B nach der Uhr C oder der Uhr C nach dem Ladegerät B geladen werden,
5. so daß die Chipkarte A oder die Uhr C die von dem Ladegerät B geladenen Daten mit einem Applikationsgerät D kontaktbehaftet oder kontaktfrei austauschen können,
6. wobei das Applikationsgerät D die Daten speichert und/oder nutzt, um online oder offline, kontaktbehaftet und/oder kontaktfrei weitere Geräte anzusteuern oder mit weiteren Geräten Daten und/oder Programme auszutauschen.

Mit dem erfindungsgemäßen Verfahren ist es für den Nutzer einer elektronischen Uhr in vorteilhafter Weise möglich, geldwerte Leistungen in Anspruch zu nehmen, wie sie bisher nur von Chipkarten gewährleistet wurden. In vorteilhafter Weise ermöglicht das patentgemäße Verfahren neuartige Nutzungen von Uhren und/oder Chipkarten aufgrund des speziellen Austausches von Information zwischen Chipkarte und Uhr.

Beim erfindungsgemäßen Verfahren handelt es sich um ein solches zum Datenaustausch bzw. wechselweisen Informationsaustausch zwischen einer elektronischen Uhr C und einer Chipkarte A über ein die Daten ermittelndes Gerät B, wie Ladegerät oder Terminal. Die Chipkarte A enthält technische Mittel, wie einen Mikroprozessor mit Speicher und Datenein- und/oder Datenausgänge, mit denen sie mit dem Ladegerät B Daten über galvanische Kontakte und/oder eine kontaktfreie elektromagnetische Verbindung austauschen kann. Es können Daten von der Chipkarte zu dem Ladegerät B aber auch vom Ladegerät B zur Chipkarte geladen werden. Insbesondere können bestimmte Sicherheitsprozeduren in der Form von Programmen oder PIN-Prüfungen oder kryptografischen Verfahren für einen Schutz der übertragenen Daten zwischen A, B sorgen. Es können z.B. Geldeinheiten über die Kontaktstrecke von dem Ladegerät B an die Chipkarte A unter Einhaltung von bei Banken und im Bankengeldverkehr üblichen Sicherheitsvorkehrungen in einen ersten Speicher übertragen werden. In der Chipkarte können diese Geldeinheiten oder die dazu äquivalenten in einem bestimmten Zahlenverhältnis stehenden Nutzungseinheiten, branchenüblicher Ausdruck: tokens, in einem zweiten Speicher gespeichert werden. Solche Nutzungseinheiten dienen z.B. zum Wahrnehmen von Parkzeit in Parkhäusern, indem beim Einfahren die Einfahrzeit auf der Chipkarte gespeichert wird und beim Ausfahren die Differenz zur Ausfahrzeit ermittelt und in eine Anzahl Nutzungseinheiten umgerechnet wird, wobei dies Anzahl von derjenigen subtrahiert wird, die als Anzahl Nutzungseinheiten im Speicher der Chipkarte vorhanden war.

Das Ladegerät B enthält zusätzlich zu den Mitteln zum kontaktbehafteten und/oder kontaktfreien Datenaustausch mit der Chipkarte A Mittel zum kontaktbehafteten und/oder kontaktfreien Datenaustausch mit einer Uhr C. Es können die Daten, welche in einem ersten Schritt von der Chipkarte A nach dem Ladegerät B oder vom Ladegerär B nach der Chipkarte A zwecks Speicherung in einen ersten oder zweiten Speicher geladen wurden, in einem zweiten Schritt von dem Ladegerät B nach der Uhr C oder nach einer Datenveränderung in der Uhr C zurück nach dem Ladegerät B geladen werden. Derart können beispielsweise die Nutzungseinheiten, welche aus einem Speicher von der Chipkarte A über das Ladegerät B ein und/oder ausgeladen wurden, von dem Ladegerät B in den Speicher der Uhr C gelangen.

Ebenso enthält die Uhr C Mittel zum kontaktbehafteten und/oder kontaktfreien Datenaustausch mit der Chipkarte A sowie mit dem Ladegerät B. Ebenso enthält die Uhr C Mittel zum Speichern von Daten.

Es befinden sich also Daten gleicher Herkunft, wie sie in der Kartenbrache üblich auf Chipkarten vorhanden sind, zusätzlich wahlweise in dem Speicher einer Uhr C. Mit diesen Daten, die in ihrer logischen Struktur sowohl in der Uhr als auch in der Chipkarte gleich sein können, kann ein weiteres Gerät D, Applikationsgerät, gleiche Funktion auslösen, unabhängig davon ob es von einer Uhr oder von einer Chipkarte genutzt wird und mit der Uhr bzw. der Chipkarte in Datenaustausch tritt. Das Gerät D speichert die Daten für Nachweiszwecke, wie Zutrittszeiten und/oder nutzt die Daten, um online oder offline, kontaktbehaftet und/oder kontaktfrei weitere Geräte anzusteuern oder mit weiteren Geräten Daten und/oder Programme auszutauschen.

Mit diesem Verfahren ist es damit möglich, Daten von einer Chipkarte auf eine Uhr aber auch von einer Uhr auf eine Chipkarte mittels eines Gerätes D zu laden und Chipkarte oder Uhr zu gleichen Zwecken, nämlich Anwendungen, Applikationen, zu nutzen.

Werden Leistungen per Einheiten von Chipkarten gezahlt, gilt es, zwei Arten von Daten, nämlich DA1, DA2, zu unterscheiden. Bei DA1 handelt es sich um Daten, die zum Kauf von beliebigen Waren und Leistungen eingesetzt werden können. Es handelt sich um Einheiten, die direkt mit den Zahlen auf Geldscheinen vergleichbar sind, indem z.B. 10 DA1-Einheiten genau 10 DM oder 10 EURO entsprechen. Bei den Daten DA2 handelt es sich um Daten, die zum Nutzen (eingeschränkter Kauf) einer ganz bestimmten Leistung eingesetzt werden können. Es sind beispielsweise an einem "Ticketautomaten" eines Anbieters des öffentlichen Personennahverkehrs Geldeinheiten in Form DA1 an den Ticketautomaten übertragen und in eine Anzahl von Fahreinheiten DA2 gewandelt worden.

Diese Daten DA2 werden in einen bestimmten, für die Inanspruchnahme von Fahrleistungen vorgesehenen Speicher der Chipkarte geschrieben, sind somit auf der Chipkarte neben Daten DA1 als Daten DA2 enthalten. Bei den Daten DA1 handelt es sich um Daten, für welche von Kreditkartenorganisationen oder Banken eine rechtliche Beziehung zu Geld gewährleistet wird, da die vom Nahverkehrsanbieter erhaltenen Geldeinheiten DA1 von Banken in Geld gewandelt werden können, womit diese Daten DA1 als Ersatz beim Einkauf beliebiger Güter verwendet werden können. Nach der Wandlung in einem Terminal sind in der Chipkarte in dem Speicher Daten DA2 enthalten, die für einen bestimmten Zweck und/oder eine bestimmte geldwerte Leistung wie "Bus fahren" zur Verfügung stehen. Die DA2 haben eine eindeutige rechnerische Zuordnung zu den Daten DA1, da eine Fahreinheit DA2 eine bestimmte Menge DA1 darstellt. Stehen die Daten DA2 zur Verfügung, hat der Leistungsanbieter, wie Nahverkehrsanbieter, seine Geldeinheiten DA1 bereits erhalten; die in der Chipkarte vorhandenen Daten DA2 können nun beliebig auf andere Geräte, wie Uhren, übertragen werden, um das Nutzen der mit Einheiten abzufordernden Leistung (Bus fahren) einfach zu gestalten. Die Daten DA2 werden in einem Gerät D, beispielsweise zum Zweck der Fahrausweisprüfung, als Nachweis und/oder als Berechtigung und/oder für Abbuchungszwecke verwendet.

Als Beispiel für das Verfahren soll die Übertragung von geldwerten Einheiten von einer Chipkarte, wie sie im deutschen Kreditgewerbe üblich ist, auf eine Armbanduhr dargestellt werden. Auf einer Bankenchipkarte, wie Geldkarte, befinden sich Speichereinheiten, die in rechtlich gesicherter und eindeutiger Beziehung zu Geld stehen. Diese Geldeinheiten können nicht über beliebige und eventuell unsichere Übertragungsstrecken auf andere Datenträger wie Uhren übertragen werden. Sind die Geldeinheiten aus dem Teil der Chipkarte, welcher nur durch Kontakte zugreifbar ist, als Werteinheiten z.B. für die Inanspruchnahme von Fahreinheiten für den Personennahverkehr gewandelt und liegen in einem Speicher hierfür vor, auf den über die kontaktfreie Strecke zugegriffen werden kann, können diese Werteinheiten in eine Armbanduhr übertragen werden. Tritt die Armbanduhr in kontaktfreien Datenaustausch mit einem die Werteinheiten akzeptierenden Terminal, kann statt Chipkarte auch die Uhr zum Abbuchen der Werteinheiten für die Inanspruchnahme "Bus fahren" verwendet werden.

Das Gerät B dient vorwiegend zwei Zwecken. Es muß die Energie zum Datenaustausch mit Chipkarte bzw. Uhr zur Verfügung gestellt werden. Zusätzlich müssen bestimmte Sicherheitsvorkehrungen eingehalten werden. Beide Funktionen können von einem Mobiltelefon übernommen werden.

Vorzugsweise kann das Gerät mit einer entfernten Station Daten austauschen, wobei die entfernte Station die Vorgänge des Datenaustauschs zwischen der Chipkarte A und dem Ladegerät B steuert und/oder überwacht. Die Vorgänge des wechselweisen Datenaustausches zwischen A, C können somit von einer entfernt stehenden Station überwacht und/oder gesteuert werden. Handelt es sich bei dem Austausch von Daten um geldwerte Einheiten, kann es zweckmäßig sein, wenn eine autorisierte Zentrale die Datenkommunikation zwischen A und C überwacht oder in die Kommunikation eingreift oder die Kontrolle über ihren Ablauf übernimmt. Insbesondere eignet sich ein Mobiltelefon für diese Aufgaben. Das Mobiltelefon kann zusätzlich über seine übliche drahtlose Verbindung mit einer Zentrale verbunden sein, in der die Vorgänge der Übertragung von Daten von A zu C, über B und umgekehrt von C zu A über B, überwacht werden.

Die Schnittstellen zum Datenaustausch zwischen A, B und B, C können in ihrer physikalischen und/oder logischen Ausprägung bzw. Protokollausführung unterschiedlich sein. Das Gerät B kann sowohl über die Schnittstellen zur Kommunikation mit A wie C verfügen. Die Geräte D können dagegen in einer ersten Ausgestaltung D1 oder D2 vorliegen, wobei D1 nur mit C oder A kommunizieren kann und D2 in einer zweiten Ausgestaltung nur mit A oder C.

Die Funktion des Gerätes B kann an zwei räumlich getrennten Orten stattfinden. An einem ersten Ort X steht das Gerät B1 zum Zweck des Datenaustausches mit A und an einem Ort Y das Gerät B2 zum Zweck des Datenaustausches mit C. B1 kann mit B2 drahtgebunden und/oder drahtlos kommunizieren.

Es können die Funktionen des Gerätes B in zwei räumlich entfernt stehenden Geräten B1, B2 durchgeführt werden, wobei B1 die Daten mit der Chipkarte A an einem ersten Ort X austauscht, und das Gerät B1 die mit A ausgetauschten Daten zu einem zweiten Gerät B2 am Ort Y überträgt. Das Gerät B2 tauscht dann die mit B1 ausgetauschten Daten mit der Uhr C aus.

Steht der Uhr und/oder der Chipkarte genügend Energie zum Übertragen von Daten zur Verfügung, kann die Datenübertragung auch ohne vermittelndes Gerät B erfolgen; die Uhr C kann derart direkt mit der Chipkarte A kontaktfrei und/oder kontaktbehaftet Daten austauschen. Die Energie kann in die Chipkarte mittels elektromagnetischer Energieeinspeisung übertragen werden, wobei eine der bekannten Spulenübertragungen von Energie von einem externen Gerät genutzt wird, welches ausschließlich Energie und keine Daten überträgt.

Das Gerät zur Verfügungstellung der Energie kann auch über Kontakte an der Chipkarte und/oder der Uhr angeschlossen sein. Chipkarte sowie Uhr sind in eine geeignete Vorrichtung zu bringen, mit der genügend Energie für A und/oder C zur Verfügung gestellt wird, wobei die Programme zur Abwicklung des Datenaustausches voll in Uhr und/oder Chipkarte enthalten sind, so daß ein zusätzliches Gerät, in dem die Daten übertragen werden, nicht benötigt wird. Es kann aber auch in der Chipkarte und/oder der Uhr eine Batterie als Energiequelle vorhanden sein.

### Kurzbeschreibung der Zeichnung, in der zeigen:

- Figur 1: in symbolischer Darstellung eine Chipkarte mit A, ein Ladegerät B sowie eine Uhr C und
- Figur 2: in symbolischer Darstellung einen Datenaustausch zwischen Uhr C oder Chipkarte A an ein und demselben Gerät D.

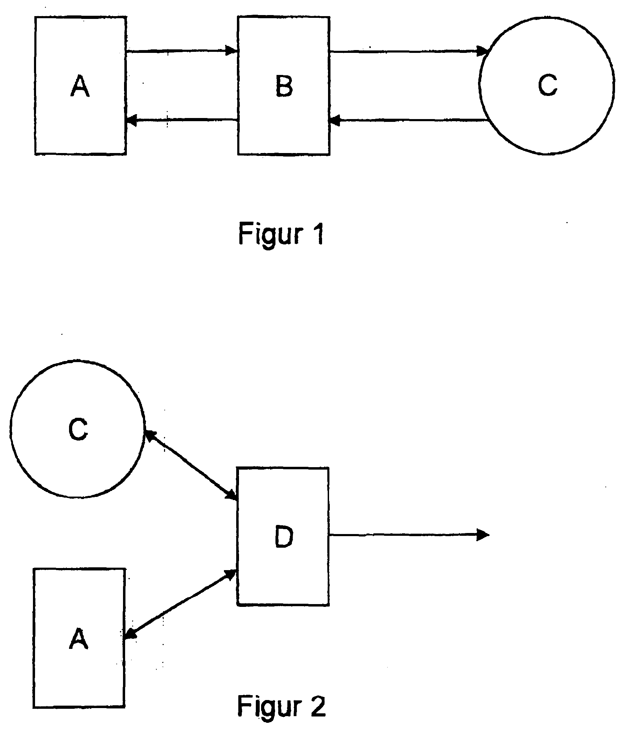

In Figur 1 ist symbolisch die Chipkarte mit A gekennzeichnet, die Uhr mit C. Das Gerät zum Datenaustausch zwischen Chipkarte und Uhr ist mit B gekennzeichnet. Mit den Pfeilen sind die Datenströme, nämlich Kanäle für bidirektionalen Datenaustausch, gekennzeichnet. Bei dem Gerät B kann es sich auch um ein Mobiltelefon handeln, welches über eine ausreichende Energiequelle verfügt, um Daten von einer Chipkarte zu einer Uhr bzw. Chipkarte zu übertragen.

In Figur 2 ist symbolisch dargestellt, wie sowohl ein Datenaustausch zwischen Uhr C oder Chipkarte A an ein und demselben Gerät D auftreten kann. Gerät D kann über eine online oder offline Datenverbindung mit einem übergeordneten entfernt stehendem Rechensystem verbunden sein.

### Gewerbliche Anwendbarkeit:

Der Gegenstand der Erfindung ist insbesondere für den Datenaustausch zwischen Chipkarten und Uhren geeignet, wobei die Daten innerhalb der Uhr in einem Applikationsgerät D als Nachweis und/oder Berechtigung für die Inanspruchnahme einer geldwerten Leistung dienen, zum Beispiel anschließend kann die Uhr beim Einsatz im öffentlichen Personennahverkehr für Zahlungsvorgänge genutzt werden.

## Patentansprüche

1. Verfahren zum Steuern und Bewerkstelligen des Ablaufes eines wechselweisen Informations- und Datenaustauschers zwischen einer elektronischen Uhr (C) und einer Chipkarte (A), sowie einem Ladegerät/Terminal,
dadurch gekennzeichnet, daß
1. eine Chipkarte A Mittel enthält, mit denen sie mit einem Ladegerät B Daten über galvanische Kontakte und/oder eine kontaktfreie elektromagnetische Verbindung austauschen kann.
2. wobei die Chipkarte A Mittel zum Speichern von Daten enthält
3. wobei das Ladegerät B zusätzlich zu den Mitteln zum kontaktbehafteten und/oder kontaktfreien Datenaustausch mit der Chipkarte A Mittel zum kontaktbehafteten und/oder kontaktfreien Datenaustausch mit einer Uhr C enthält,
4. wobei Daten, welche in ein einem ersten Schritt von A nach B oder B nach A zwecks Speicherung geladen wurden, in einem zweiten Schritt von B nach C oder C nach B geladen werden,
5. so daß A oder C die von B geladenen Daten mit einem Applikationsgerät D kontaktbehaßet oder kontaktfrei austauschen können,
6. wobei D die Daten speichert und/oder nutzt, um online oder offline, kontaktbehaftet und/oder kontaktfrei weitere Geräte anzusteuern oder mit weiteren Geräten Daten und/oder Programme auszutauschen.

2. Verfahren nach Anspruch 1, dadurch gekennzeichnet, daß
1. in der Chipkarte zwei Typen von Daten DA1, DA2 enthalten sind
2. wobei es sich bei den Daten DA1 handelt, für welche von Kreditkartenorganisationen oder Banken eine rechtliche Beziehung zu Geld gewährleistet wird, womit diese Daten als Ersatz beim Einkauf verwendet werden können
3. wobei in der Chipkarte in dem Speicher DA2 Daten enthalten sind, die für einen bestimmten Zweck und/oder eine bestimmte geldwerte Leistung zur Verfügung stehen,
4. wobei die DA2 eine eindeutige rechnerische Zuordnung zu den Daten DA1 haben,
5. wobei die Daten DA2 von der Chipkarte A in die Uhr C über das Ladegerät B geladen werden.
6. wobei die Daten DA2 in einem Applikationsgerät D als Nachweis und/oder Berechtigung für die Inanspruchnahme einer geldwerten Leistung dient.

3. Verfahren nach Anspruch 1 oder 2, dadurch gekennzeichnet,
daß das Ladegerät B ein Mobiltelefon ist.

4. Verfahren nach Anspruch 1, dadurch gekennzeichnet,
daß das Gerät mit einer entfernten Station Daten austauscht, wobei die entfernte Station die Vorgänge des Datenaustausches zwischen der Chipkarte A und dem Ladegerät B steuert und/oder überwacht.

5. Verfahren nach Anspruch 1 oder 2, dadurch gekennzeichnet,
daß die Chipkarte A ausschließlich an Geräten D1 und die Uhr C ausschließlich an Geräten D2 genutzt werden kann.

6. Verfahren nach Anspruch 1, dadurch gekennzeichnet, daß
1. die Funktionen des Gerätes B in zwei räumlich entfernt stehenden Geräten B1, B2 durchgeführt werden,
2. wobei B1 die Daten mit A an einem ersten Ort X austauscht,
3 wobei B1 die mit A ausgetauschten Daten zu einem zweiten Gerät B2 am Ort Y überträgt,
4. wobei B2 die mit B1 ausgetauschten Daten mit der Uhr C austauscht.

7. Verfahren nach Anspruch 1, dadurch gekennzeichnet, daß
die Uhr C direkt mit der chipkarte A kontaktfrei und/oder kontaktbehaftet Daten austauscht, wobei die Energie zum Datenaustausch entweder über Mittel in der Uhr C oder über Mittel in der Chipkarte A zur Verfügung gestellt wird.
